(19) Europäisches Patentamt
European Patent Office
Office européen des brevets

(11) Publication number: 0 348 200
A2

# (12) EUROPEAN PATENT APPLICATION

(21) Application number: **89306319.8**

(22) Date of filing: **22.06.89**

(51) Int. Cl.[4]: **C 08 F 210/02**
C 08 F 2/38, C 09 J 3/14
//(C08F210/02,220:00,218:08)

(30) Priority: **22.06.88 US 212402**

(43) Date of publication of application:
**27.12.89 Bulletin 89/52**

(84) Designated Contracting States:
**AT BE CH DE ES FR GB GR IT LI LU NL SE**

(71) Applicant: **EXXON CHEMICAL PATENTS INC.**
**200 Park Avenue**
**Florham Park New Jersey 07932 (US)**

(72) Inventor: **Domine, Joseph Dominic**
**19523 Hurst Wood Drive**
**Humble Texas 77522 (US)**

(74) Representative: **Veldhuizen, Albert Dirk Willem et al**
**Exxon Chemical Limited Exxon Chemical Technology Centre PO Box 1**
**Abingdon Oxfordshire OX13 6BB (GB)**

## (54) Modified ethylene copolymers for use adhesives.

(57) An ethylene copolymer having a polar copolymer content of from 3 to 50% by weight (based on the copolymer), a melt index from 1 to 10,000 and nil side chain branching caused by incorporation of chain transfer agent into the backbone of the copolymer; and a hot melt composition containing the ethylene copolymer and a tackifier. The ethylene copolymer generally contains alaphatic side chain branching of less than 10 units per 1,000 backbone carbon atoms. The polymers have improved tensil and hardness properties as well as improved elongation modulus.

EP 0 348 200 A2

## Description

# MODIFIED ETHYLENE COPOLYMERS FOR USE IN ADHESIVES

FIELD OF THE INVENTION:

The present invention is directed to ethylene copolymers which have substantially improved properties. More particularly, the present invention is directed to specially modified ethylene copolymers for use in adhesives. The use of aldehyde(s) as chain transfer agent(s) in the polymerization of the specially modified ethylene copolymers results in adhesives with improved performance at elevated temperatures.

BACKGROUND OF THE INVENTION:

The use of ethylene copolymers for hot melt adhesive systems is well known in the art.

U.S. Patent No. 4,497,941 discloses specific ethylene-vinyl acetate copolymers as the "backbone" polymer for hot melt adhesives (for convenience referred to as "HMA"). The ethylene-vinyl acetate copolymers are useful in hot melt systems which include HMA, hot melt pressure-sensitive adhesives, hot melt coatings, hot melt laminating compositions and hot melt road-marking compositions. This patent discloses the preparation of the ethylene vinyl acetate copolymer by a high pressure polymerization process in which ethylene and an appropriate amount of vinyl acetate are polymerized at specified conditions, optionally in the presence of an appropriate amount of a chain transfer agent, to give the desired melt index to the ethylene vinyl acetate product.

This patent specifically discloses (column 8, lines 1-28):

"The chain transfer agent or modifier may be introduced into the reaction vessel to adjust the melt index of the product. The amount of chain transfer agent used therefore depends on the agent chosen and the final melt index sought, as well as the reaction conditions employed and vinyl acetate content since the latter acts as a chain transfer agent itself. Typically the amount of chain transfer agent will be from 0 to 25% of the reactor feed. The use of chain transfer agents is well known, and given the requirements specified herein for the melt index of the EVA it is believed to be within the competence of one skilled in the art to determine a suitable agent and rate of addition empirically. By way of illustration it may be said that suitable agents include those with $C_s$ values (measured at 1360 atmosphere and 130° C. for homopolymerization of ethylene) of up to 1.0 and include hydrogen, acetone, butyraldehyde, cyclohexanone, butene-1, propylene, butane and isobutylene. $C_s$ values of up to 0.1 are preferred. It has been found that isobutylene is a convenient chain transfer agent. It is noted that in some instances there will be incorporation of the chain transfer agent into the EVA copolymer. For example, when isobuylene is employed the product will be effectively an ethylene/vinyl acetate/isobutylene terpolymer. As used herein, the terms "EVA", "EVA copolymer" and "ethylene vinyl acetate copolymer" include polymers containing such additional comonomers."

The present invention is directed to an improvement in such ethylene copolymers due to the selection of chain transfer agents so as not to incorporate the chain transfer agent into the backbone of the copolymer creating short chain branching. As is specifically set forth above in U.S. 4,497,941, the chain transfer agent is considered to be incorporated into the copolymer. It has been found according to the present invention that the use of aldehydes, which are non-incorporative, produces ethylene copolymers which have significantly improved properties and which yield hot melt compositions with better properties.

SUMMARY OF THE INVENTION

The present invention is directed to ethylene copolymers which are characterized by having nil side chain branching caused by incorporation of chain transfer agents in the backbone of the copolymer and the method of preparing such copolymers by the use of aldehydes as chain transfer agents in the polymerization of the ethylene copolymers.

The present invention is still further directed to hot melt compositions utilizing as the base polymer component the specially modified ethylene copolymers of the present invention.

BRIEF DESCRIPTION OF THE DRAWINGS

The present invention will be more readily apparent from the appended drawing.

Fig. 1 is a schematic diagram illustrating an apparatus for carrying out the polymerization of the ethylene copolymers of the present invention.

DESCRIPTION OF THE INVENTION

The present invention will now be described in more detail, though only by way of illustration, with reference to Fig. 1, which schematically sets forth in a block diagram the apparatus including compressors, reactor, heat exchanger, extruder and connecting lines utilized to prepare the copolymers of the present invention.

Ethylene gas is introduced into compressor 1. A polar monomer and chain transfer agent are added via line 2 and the combined feed is further compressed in compressor 3. The high pressure feed is then introduced into reactor 4. A free radical initiator is introduced via line 5 and optionally at separate points on the reactor (not shown). The reactor 4 may be cooled or heated as appropriate to maintain the desired reaction temperature.

The formed polymer, together with unreacted material and impurities is taken via line 6 to a high pressure

separator 7. Unreacted monomer is separated and recycled via heat exchanger 11 to compressor 3. The remainder of the output is fed to low pressure separator 8 from which the copolymer is collected and fed to extruder 9 where it is formed into pellets. The unpolymerized material separated at 8 is fed via heat exchanger 12 to a small compressor 10. Impurities are separated and purged via line 13, and unreacted monomers are recycled to compressor 1.

The polymerization may be effected in a conventional autoclave or tubular reactor. The reaction conditions for a tubular reactor are different than those used in an autoclave. The conditions are chosen from the following:

TUBULAR REACTOR

| | Range | Preferred |
|---|---|---|
| Inlet Temperatures,°F | 260-350 | 275-300 |
| Peak Temperatures,°F | 330-450 | 340-375 |
| Pressures, kpsi | 30-50+ | 42-50+ |
| Initiators, amount, type | As needed to make temperature range (perdecanoate, perpivalate, peroctoate, perbenzoate) | perdecanoate/ perpivalate) |
| Conversion, % | 10 - 35 | 12 - 25 |

AUTOCLAVE REACTOR

| | Range | Preferred |
|---|---|---|
| Inlet Temperature, °F | 40-220 | 50-100 |
| Reactor Temperature, °F | 220-575 | 250-450 |
| Pressures, kspi | 15-45 | 24-45 |
| Residence time, sec. | 15-45 | -- |
| Initiators | Peroxides with a half life in the range of 0.2 to 1.5 sec. at the temperature used. | |

The specific choice of conditions depending on reactor used is well within the skill of the art.

The copolymers of the present invention are ethylene copolymers modified with polar comonomers. Polar comonomers, as the term is used herein, are unsaturated hydrocarbons containing oxygen, nitrogen, and/or sulfur atoms yielding polarizable molecules and are free-radically polymerizable with ethylene. Suitable polar comonomers may be selected from vinyl esters, alkyl acrylates, methacrylates and acids such as (meth)acrylic acid. More than one comonomer may be incorporated into the copolymers of the present invention. Accordingly, the term copolymer as used herein includes terpolymers, (e.g., ethylene-vinyl ester-(meth)acrylic acid copolymers) or interpolymers and polar comonomer may be singular or plural. The polar comonomer is present in the copolymer from 3% to 50% by weight, preferably 5% to 50% by weight. For copolymers incorporating acidic comonomers, lower comonomer levels are normally used, sometimes as low as 1% by

weight. For this invention, comonomer contents of at least about 3% by weight (based on the copolymer) or greater are preferred. Usually, for example ethylene-vinyl acetate copolymers, 15% to 40% by weight of the copolymer is derived from the polar comonomer(s). For hot melt adhesives (HMA), the polar comonomers are present in 18% to 35% by weight (based on the copolymer), preferably 25% to 35% by weight. Specific polar monomers by way of illustration, include vinyl acetate and vinyl formate; methyl (meth)acrylate, ethyl (meth)acrylate, (iso) butyl (meth)acrylate; (meth)acrylic acid; and (meth)acrylonitrile.

According to the present invention, it has been found that the incorporation into the polymer backbone of the chain transfer agent used in the preparation of copolymers of ethylene and polar monomers has a significantly adverse effect on the properties of the copolymers produced. According to the present invention, aldehydes are used as the chain transfer agents which are non-incorporating into the polymer backbone. It has been found according to this invention that in the polymerization of these ethylene copolymers where aldehydes are used as the chain transfer agent that side chain branching, as caused by the chain transfer agent is nil, and that the enhancing of the properties of the specially modified copolymers is significant. The aldehydes suitable are the aliphatic and aromatic aldehydes having 2 to 9 carbon atoms such as, but not limited to, acetaldehyde, propionaldehyde, butyraldehyde, valeraldehyde, caproaldehyde, nonaldehyde, and benzaldehyde.

As is well known to those skilled in the art, the amount of aldehyde chain transfer agent used is directly related to the desired melt index of the copolymer product which is to be obtained. The higher melt index products require more chain transfer agent. Typically the amount of chain transfer agent will be from 1 to 25% of the reactor feed.

Copolymers of the present invention may have melt indexes which range from 1 to 10,000 or more, preferably 5 to 10,000. It is recognized that the comparison of properties between copolymers of the present invention and copolymers produced with incorporating chain transfer agents is more pronounced at melt indexes above 100. Such copolymers having a melt index above 100 are very useful as the copolymer used in HMA. One conventional form of HMA is based on a ternary composition comprising: (a) high molecular weight ethylene-vinyl acetate copolymer; (b) a resin; and (c) a wax. The ethylene-vinyl acetate copolymer is the "backbone polymer" for such a HMA or other hot melt composition, and contributes to the mechanical and adhesive properties of such compositions.

To further express the non-incorporating aspect of the aldehyde chain transfer agents of the present invention, the side chain branching caused by an incorporating chain transfer agent, such as propylene, is illustrated. Propylene has a structure:

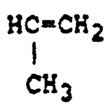

Propylene will act as a chain transfer agent but will also enter into the reaction yielding methyl branches as shown:

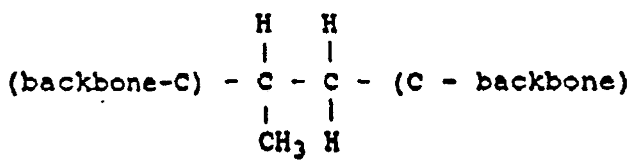

Where the (backbone-C) or (C-backbone) are carbon atoms from the ethylene or comonomer(s) forming the backbone of the copolymer.

Carbon 13 NMR spectroscopy can be used to quantify the short chain aliphatic branching (e.g.; specifically methyl when propylene is used) on the copolymer. Two samples of ethylene vinyl acetate copolymer were produced under essentially the same conditions except one sample was made with acetaldehyde and the other sample with propylene chain transfer agent. Carbon 13 NMR spectroscopy analysis of the samples provided the following results:

| Sample | Number of Methyl Branches per 1000 Backbone Carbon Atoms | Total Number of Aliphatic Branches per 1000 Backbone Carbon Atoms |
|---|---|---|
| 1 | 0.0 | 5.7 |
| 2 | 5.7 | 14.7 |

Accordingly, this data demonstrates that the use of propylene, a conventional chain transfer agent, results in a significant level of methyl branching, whereas the use of acetaldehyde, a non-incorporating chain transfer agent, eliminates methyl branching and dramatically reduces total aliphatic side chain branching resulting in copolymer products of superior performance.

The compositions of the present invention may be described as copolymers having a total aliphatic side chain branching of less than 10 per 1,000 backbone carbon atoms. Preferably the aliphatic side chain branching of the copolymers is less than 8 per 1,000 backbone carbon atoms. The copolymer above (Sample 1) has 5.7 total aliphatic side chain branches, or less than 6 total units, per 1,000 backbone carbon atoms.

The present invention is specially illustrated by the following examples and the results of tests carried out on the various examples. These examples and tests are by way of illustration to show certain aspects of the invention and its evaluation in more detail.

## EXAMPLES

Polymerizations were carried out using apparatus as described hereinbefore to produce copolymers of ethylene and vinyl acetate which have a melt index and vinyl acetate content comparable to commercial copolymers in a tubular reactor under the following conditions:

| | Examples 1 | 2 | 3 | 4 |
|---|---|---|---|---|
| Reactor Pressure, kpsi | 45 | 45 | 45 | 45 |
| Inlet Temperature,°F | 290 | 290 | 290 | 290 |
| Peak Temperature, °F | 375 | 350 | 350 | 350 |
| Vinyl Acetate Ratio* | 0.400 | 0.400 | 0.400 | 0.400 |
| Acetaldehyde Ratio** | 0.0077 | 0.00875 | 0.00312 | 0.000347 |
| Melt Index, dg/min | 581 | 205 | 61 | 6.5 |
| Vinyl Acetate, wt% | 27.5 | 27.5 | 28.8 | 28.8 |

* Ratio of weight of vinyl acetate to weight of ethylene feed put into the reaction system.

**Ratio of weight of acetaldehyde to weight of ethylene feed put into the reaction system.

The Examples are illustrative of copolymers with polar comonomer contents of between 25% and 35% by weight (based on the copolymer) and have commercial application in HMA.

The ethylene vinyl acetate copolymers produced in Examples 1, 2, 3, and 4 were compared with commercial products manufactured by Exxon and sold as ESCORENE (a registered mark of Exxon Chemical Company) 7710, 7720, 7740, and 7760, respectively. Another commercial product made by E. I. DuPont and sold commercially as ELVAX ( registered mark of E.I. DuPont Company) 210, 220, 240, and 260, respectively, were obtained and tested using the same tests as used in the examples of the present invention. The results are set forth in the following Table I.

The data in Table I is all obtained by standard tests. For example:

Test Procedures:

| | |
|---|---|
| · % VA | Exxon Method |
| · MI (Melt Index) | ASTM D-1238 |
| · Wax Blend Viscosity | ASTM D-3236<br>30% EVA<br>70% 155°F MP Paraffin Wax |
| · Ring & Ball Softening Point | ASTM E-28 |
| · Shore A Hardness | ASTM D-2240 |
| · Tensile Strength/Modulus | ASTM D-638 |

TABLE I

| | Ex.-1 | 7710 | 210 | Ex.-2 | 7720 | 220 | Ex.-3 | 7740 | 240 | Ex.-4 | 7760 | 260 |
|---|---|---|---|---|---|---|---|---|---|---|---|---|
| VA % | 27.5 | 28.0 | 30.7 | 27.5 | -- | 28.7 | 28.8 | 28.1 | 28.9 | 28.8 | 27.9 | 28.7 |
| Melt Index, dg/min | 541 | 489 | 350 | 205 | 181 | 154 | 61 | 53 | 37 | 6.5 | 7.2 | 7.1 |
| Wax Blend Viscosity, cps at 250°C. | 368 | 374 | 360 | 640 | -- | 660 | 1418 | 1500 | 1535 | 5125 | 5150 | 4388 |
| Ring and Bell S.P., °C | 88.5 | 83 | 79 | 93.5 | 88.5 | 89.5 | 102.5 | 99.5 | 113 | 147.5 | 147 | 152 |
| Shore A Hardness | 81 | 72 | 53 | 81 | 73 | 67 | 79 | 71 | 71 | 80 | 80 | 74 |
| Tensile, psi | 933 | 444 | 274 | 1249 | 897 | 720 | 2204 | 1483 | 961 | 3186 | 2893 | 2774 |
| Modulus at 100% elongation, psi | 2079 | 850 | 538 | 1482 | 852 | 1048 | 1445 | 889 | 1098 | 1409 | 1408 | 1244 |

It can be seen from the data in Table I that the properties of the copolymers of the present invention are greatly enhanced since the hardness is equal to or greater in each instance to an equivalent copolymer using a different chain transfer agent, whereas the tensile strength and 100% modulus is improved in all comparative tests. The data also gives a clear indication that where the amount of chain transfer agent is increased to increase the melt index to over 100, the use of acetaldehyde as the chain transfer agent produces products with substantially improved properties over the comparative ESCORENE products which employ propylene, which becomes incorporated into the copolymer, as a chain transfer agent. The data also shows a substantial improvement in properties over the comparative ELVAX products which are believed to be produced using an olefinic chain transfer agent, probably propylene or isobutylene.

These enhanced properties are significant when the copolymers of the present invention are used as the base polymer component in hot melt systems. To illustrate the enhanced properties, a hot melt adhesive property screening formulation was used to compare the copolymers of the present invention (EVA) with comparable commercial EVA copolymers, the copolymers heretofore described and set forth in Table I. The copolymers (EVA) were incorporated in the following formulation:

| Formulation: | Wt.% |
|---|---|
| Copolymer (EVA) | 33 |
| Hydrocarbon tackifier resin (EXCOREZ 2393) | 33 |
| Synthetic wax (ESCOMER H-101) | 33 |
| Phenolic antioxidant (IRGANOX 1010) | 1 |

The HMA formulations were tested and the results are set forth in Table II on the following page.

The foregoing description and examples are illustrative of the present invention and set forth a best mode.

TABLE II

| | Ex.-1 | 7710 | 210 | Ex.-2 | 7720 | 220 | Ex.-3 | 240 |
|---|---|---|---|---|---|---|---|---|
| Tensile, psi | 750 | 591 | 520 | 660 | 524 | 478 | 690 | 600 |
| Shore A Hardness | 93 | -- | 88 | 93 | 91 | 86 | -- | -- |
| SAFT*, F | 200 | 190 | 192 | 205 | 204 | 202 | 203 | 202 |
| PFT**, F | 126 | 128 | 125 | 129 | 131 | 129 | 133 | 132 |

*(Shear Adhesion Fail Temperature)

A 2.54 cm strip of tape is adhered with a 2kg roller (2 passes) to a stainless steel panel so that the overlap is 2.54 cm by 2.54 cm. Each test specimen is suspended in an air circulating oven and a 1 kg weight is attached to the tape. The oven temperature is raised continuously at a rate of 5.5°C (10°F) per 15 minutes. The average failure temperature of 5 test specimen is recorded as the Shear Adhesion Fail Temperature (SAFT).

**100 gram Peel Temperature: (Peel Fail Temperature)

- Two 1" wide strips of Kraft paper (approximately 6" long) are heat sealed with the test adhesive leaving an unbonded 2" long tab at one end.
- The sample is suspended vertically from one of the tabs in an oven at 90°F and a 100 gram weight is hung from the remaining tab.
- The temperature is raised 10°F every 15 minutes until the 100 gram weight pulls the two pieces of Kraft completely apart. The temperature at which this occurs is recorded. The 100 gram peel temperature is the average of three readings.

**Claims**

1. A composition comprising:
an ethylene copolymer having a polar comonomer content of from 3% to 50% by weight (based on the copolymer), a melt index from 1 to 10,000 and nil side chain branching caused by incorporation of chain transfer agent into the backbone of the copolymer.

2. A composition according to claim 1 wherein the melt index is above 5, preferably above 50 and especially above 100.

3. A composition according to claim 1 or claim 2, wherein said polar comonomer is selected from the group consisting of vinyl acetate, vinyl formate, methyl acrylate, methyl methacrylate, ethyl (meth)acrylate, (iso) butyl (meth)acrylate, acrylic acid and methacrylic acid.

4. A composition according to any of the preceding claims wherein said comonomer is present from in an amount of 15% to 40% by weight, preferably in an amount from 25% to 35% by weight.

5. A composition comprising:
an ethylene copolymer having a polar comonomer content of from 3% to 50% by weight (based on the copolymer), a melt index from 1 to 10,000 and an aliphatic side chain branching less than 10 units per 1,000 backbone carbon atoms.

6. A composition according to claim 5 wherein the branching is less then 8 units per 1000 backbone carbon atoms, preferably less than 6 units per 1,000 backbone carbon atoms.

7. A composition according to claim 5 or claim 6, wherein said comonomer content is from 15% to 40% by weight, preferably from 25% to 35% by weight.

8. A composition according to any of claims 5 to 7, wherein said melt index is above 50, preferably above 100 and/or wherein said comonomer is vinyl acetate.

9. A hot melt composition comprising:
a base polymer component and a tackifier, in which said base polymer component comprises an ethylene polar comonomer copolymer having a comonomer content of from 3% to 50% by weight (based on the copolymer), a melt index from 1 to 10,000 and nil side chain branching caused by incorporation of chain transfer agent.

10. A hot melt composition comprising:
a tackifier and an ethylene copolymer having a polar comonomer content of 3% to 50% by weight, a melt index from 1 to 10,000 and an aliphatic side chain branching less than 10 units per 1,000 backbone carbon atoms.

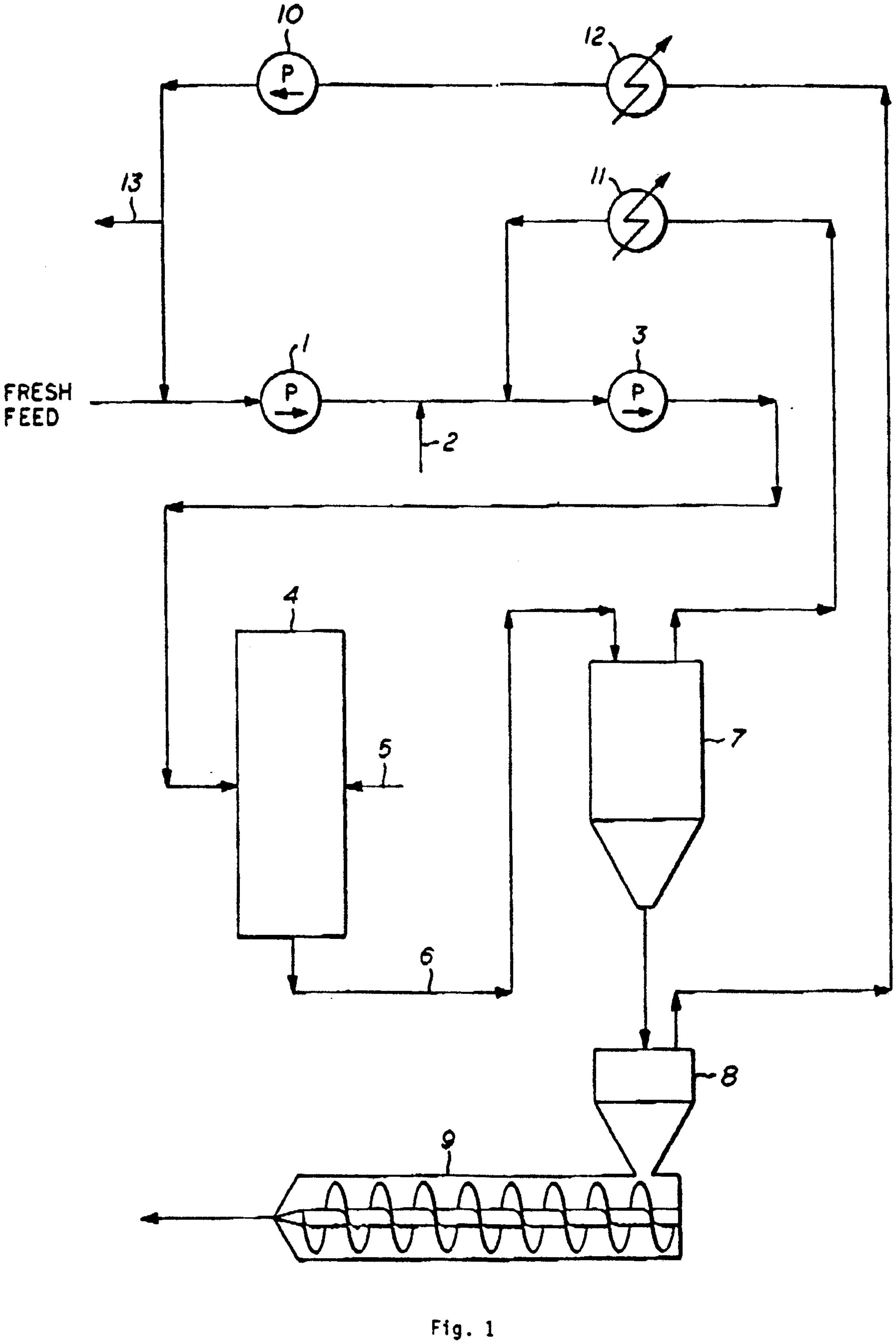


Fig. 1